# EUROPEAN PATENT SPECIFICATION

(11) **EP 2 996 389 B1**
(45) Date of publication and mention of the grant of the patent: **27.06.2018**
(21) Application number: 14794252.8
(22) Date of filing: 22.04.2014
(51) Int. Cl.: H04W 72/04, H04W 36/08, H04W 72/12, H04W 36/00, H04W 36/04

(54) **MOBILE STATION**
MOBILSTATION
STATION MOBILE

(30) Priority: 09.05.2013 JP 2013099369
(43) Date of publication of application: 16.03.2016
(73) Proprietor: NTT DOCOMO, INC., Chiyoda-ku Tokyo 100-6150 (JP)
(72) Inventor: UCHINO, Tooru, Tokyo 100-6150 (JP); TAKAHASHI, Hideaki, Tokyo 100-6150 (JP); NAGATA, Satoshi, Tokyo 100-6150 (JP); HAPSARI, Wuri Andarmawanti, Tokyo 100-6150 (JP); TAKEDA, Kazuki, Tokyo 100-6150 (JP)
(74) Representative: Hoffmann Eitle
(86) International application number: PCT/JP2014/061224
(87) International publication number: WO 2014/181673

(56) References cited:
- EP-A1- 2 343 947
- WO-A1-2012/128205
- JP-A- 2011 176 722
- JP-A- 2012 004 950
- US-A1- 2013 083 753
- ERICSSON ET AL.: 'Small cell challenges and benefits of dual connectivity' 3GPP TSG-RAN WG2 #81, R2-130416 January 2013, pages 1 - 7, XP050668082
- NTT DOCOMO, INC.: 'Necessity of C-plane architecture enhancements for dual connectivity' 3GPP TSG-RAN2# 81, R2-130488 January 2013, pages 1 - 4, XP050668107

## Description

### TECHNICAL FIELD

The present invention relates to a mobile station.

### BACKGROUND ART

In LTE (Long Term Evolution), when a mobile station UE in "RRC Connected state" moves across a cell boundary, a handover procedure is to take place in order to cause the mobile station UE to perform communication always by using an appropriate cell.

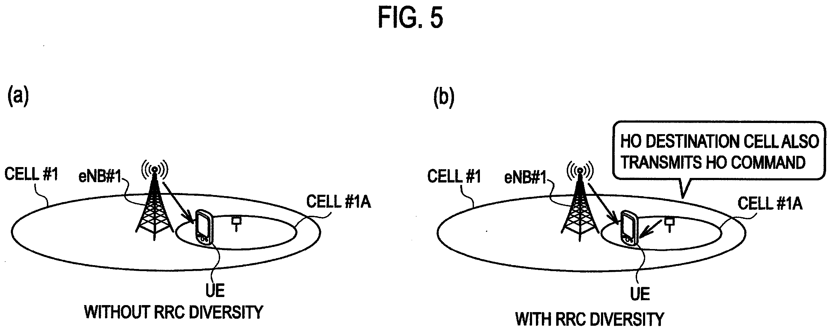

However, when the handover procedure takes place between cells using the same frequency, there is a concern that the mobile station UE cannot receive "HO command" from a handover source cell due to interference from a neighboring cell, and the handover procedure ends up in failure (see Fig. 5(a)).

Accordingly, as shown in Fig. 5(b), there has been proposed a control method (RRC diversity) configured to transmit the "HO command" not only from the handover source cell but also from a handover destination cell in order to improve a probability of reception of the "HO command" by the mobile station UE, and thus to suppress a failure in the handover procedure (see Non-patent Document 1).

Here, the "RRC diversity" can be implemented by CoMP transmission-reception (Coordinated Multi-Point transmission-reception) on a downlink.

Note that the CoMP transmission-reception on the downlink is a technique for improving throughput on the downlink by transmitting either the same or different data from multiple (a plurality of) TPs (Transmission Points) to the mobile station UE.

### PRIOR ART DOCUMENT

### NON-PATENT DOCUMENT

Non-patent document 1: 3GPP Written Contributions R2 - 131211

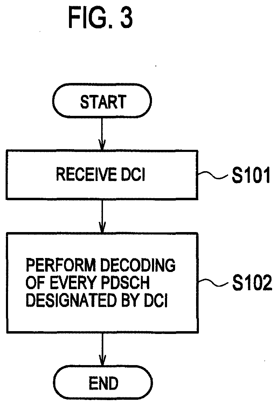

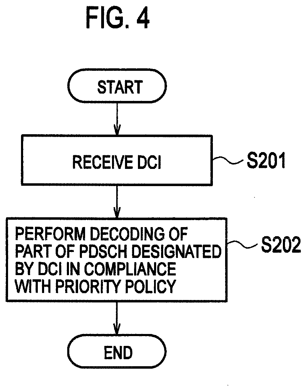

EP 2 343 947 A2 relates to a method for coordinated multi-point network operation to reduce radio link failure during handover. Figs. 3 and 4 illustrate example message flow for implementing cell handover in accordance with the present implementation. In step 132, both serving cell 12 and target cell 14 attempt to transmit a DL allocation for HCM message to UE 10. Because UE 10 is listening to both serving cell 12 and target cell 14, UE 10 may receive the transmission from either source or from both. In step 134, both serving cell 12 and target cell 14 attempt to simultaneously transmit an HCM message to UE 10 causing UE 10 to handover to target cell 14. The HCM transmission is on PDSCH using CoMP mode so the U E receives the HCM message jointly from serving cell 12 and target cell 14. As a result, the present system is robust - even if the radio link with serving cell 12 has failed entirely, UE 10 may still be able to receive the handover instructions and execute a successful handover to target cell 14.

US 2013/083753 A1 describes that systems and/or methods may be provided for supporting reduced channel bandwidth in wireless communications between devices such as UEs (e.g. including a low LTE UE category device) and/or low cost Machine-Type Communications (MTC) devices and networks that may support a full bandwidth (e.g. a full bandwidth network). As described at paragraph [0230], band location, ePDCCH, and PDSCH may be provided and/or used. For example, a device such as a UE or MTC device may monitor and/or attempt to decode both an ePDCCH and a PDSCH in the same subframe.

### SUMMARY OF THE INVENTION

At present, the CoMP transmission-reception on the downlink can be carried out only in the cells under the same radio base station eNB.

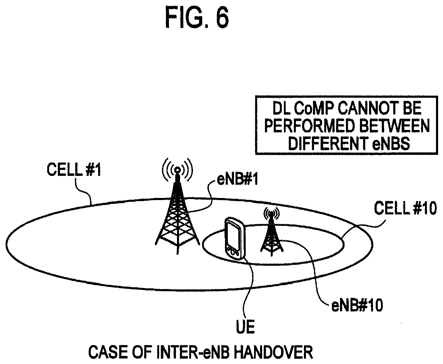

Accordingly, there is a problem that the "RRC diversity" cannot be implemented in a handover procedure between cells under different radio base stations eNB as shown in Fig. 6.

Specifically, in implementation of the "RRC diversity" in the handover procedure between the cells under different radio base stations eNB according to the conventional LTE method, there is a problem of lack of regulations as to how the mobile station UE should perform decoding processing and acquire "HO command" when the mobile station UE receives pieces of scheduling information (DCI: DL Control Information) separately from the different radio base stations eNB.

The present invention has been made in view of the aforementioned problem. An object of the present invention is to provide a mobile station which is capable of performing appropriate decoding processing and thereby acquiring "HO command" in implementation of "RRC diversity" in a handover procedure between cells under different radio base stations eNB. The invention relates to a mobile station according to claim 1. Further embodiments are defined in the dependent claims.

### BRIEF DESCRIPTION OF THE DRAWINGS

[Fig. 1] Fig. 1 is a view for explaining an overall configuration of a mobile communication system according to an embodiment of the present invention.
[Fig. 2] Fig. 2 is a functional block diagram of a mobile station UE according to the embodiment of the present invention.
[Fig. 3] Fig. 3 is a flowchart showing an operation of the mobile station UE according to the embodiment of the present invention.
[Fig. 4] Fig. 4 is a flowchart showing an operation of a mobile station UE according to a first modified example of the present invention.
[Fig. 5] Fig. 5 is a view for explaining the related art.
[Fig. 6] Fig. 6 is a view for explaining the related art.

### MODE FOR CARRYING OUT THE INVENTION

The embodiments and/or examples of the following description which are not covered by the appended claims are considered as not being part of the present invention.

### (Mobile Communication System According to Embodiment of Present Invention)

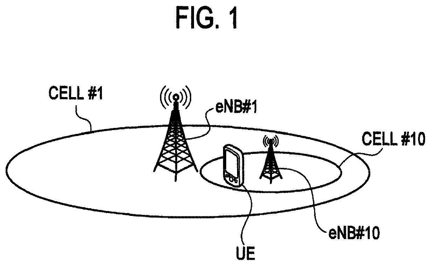

A mobile communication system according to an embodiment of the present invention will be described with reference to Fig. 1 to Fig. 3.

As shown in Fig. 1, a mobile communication system of this embodiment includes a radio base station eNB #1 which manages a cell #1, and a radio base station eNB #10 which manages a cell #10.

An area covered by the cell #1 and an area covered by the cell #10 are designed to at least partially overlap each other geographically. Here, the cell #1 and the cell #10 are cells using the same frequency.

For example, the cell #1 may be a macro cell while the cell #10 may be a small cell such as a phantom cell.

Meanwhile, the mobile communication system of this embodiment is configured to be capable of carrying out CoMP on a downlink between the cell #1 under the radio base station eNB #1 and the cell #10 under the radio base station eNB #10.

Note that this embodiment will be described on the assumption that a mobile station UE connected to the cell #1 is to be handed over to the cell #10.

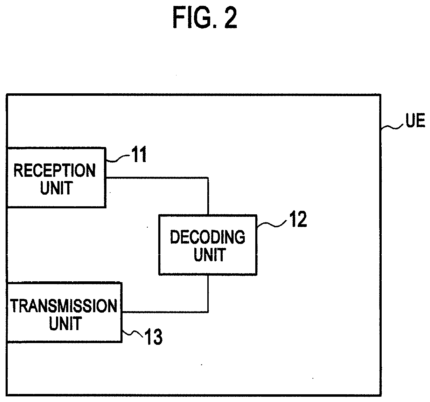

As shown in Fig. 2, the mobile station UE of this embodiment includes a reception unit 11, a decoding unit 12, and a transmission unit 13.

The reception unit 11 is configured to receive various signals from the radio base station eNB #1 and the radio base station eNB #10.

For example, the reception unit 11 is configured, when the mobile station UE is handed over from the cell #1 to the cell #10, to receive DCI from the radio base station eNB #1 and the radio base station eNB #10 through PDCCH/E-PDCCH.

Here, the "PDCCH/E-PDCCH" means PDCCH (Physical Downlink Control Channel) or E-PDCCH (Enhanced-PDCCH).

The decoding unit 12 is configured to attempt decoding every PDSCH (Physical Downlink Shared Channel) which is designated by the DCI received by the reception unit 11. Here, when the decoding processing is successful, "HO command" transmitted from the radio base station eNB #1 and the radio base station eNB #10 is acquired.

The transmission unit 13 is configured to transmit various signals to the radio base station eNB #1 and the radio base station eNB #10.

For example, the transmission unit 13 may be configured to notify a network (such as the radio base station eNB #1) of capability information (such as "UE Capability", "UE Category" and the like) indicating the number of the simultaneously processable DCI.

An operation of the mobile communication system of this embodiment will be described below with reference to Fig. 3. Specifically, an operation of the mobile station UE at the time of the handover from the cell #1 to the cell #10 in the mobile communication system of this embodiment will be described.

As shown in Fig. 3, in step S101, the mobile station UE acquires the DCI from the radio base station eNB #1 and the radio base station eNB #10 through the PDCCH/E-PDCCH.

In step S102, the mobile station UE attempts decoding every PDSCH designated by the acquired DCI.

### (First Modified Example)

A mobile communication system according to a first modified example of the present invention will be described below with reference to Fig. 4 while focusing on different features from those of the aforementioned mobile communication system according to the first embodiment.

In the mobile communication system according to the first modified example, the decoding unit 12 is configured to attempt decoding part of the PDSCH among the PDSCH designated by the DCI received by the reception unit 11, which is selected in compliance with a predetermined priority policy.

Here, the reception unit 11 may be configured to acquire the above-mentioned predetermined priority policy from a network (such as the radio base station eNB #1, the radio base station eNB #10, a mobility management node MME and the like) .

For example, the reception unit 11 may be configured to acquire the above-mentioned predetermined priority policy in the course of processing to establish an RRC connection (an RRC connection establishment procedure).

For example, the decoding unit 12 may be configured to attempt decoding the PDSCH designated by the DCI from the radio base station eNB #1 in priority to the PDSCH designated by the DCI from the radio base station eNB #10, in compliance with the above-mentioned predetermined priority policy.

Or, the decoding unit 12 may be configured to attempt decoding the PDSCH designated by the DCI located in Common-SS (Search Space) of the PDCCH in priority to the PDSCH designated by the DCI located in UE-Specific-SS of the PDCCH, in compliance with the above-mentioned predetermined priority policy.

Or, the decoding unit 12 may be configured to attempt decoding the PDSCH designated by the DCI received through the PDCCH having a higher aggregation level preferentially, in compliance with the above-mentioned predetermined priority policy.

The mobile station UE monitors the SS in the PDCCH/E-PDCCH in order to detect a control signal addressed the mobile station UE, and searches as to which section in the SS the control signal addressed to the mobile station UE is put in. Each of such sections is referred to as a "PDCCH candidate." One "PDCCH candidate" includes one or more CCE (Control Channel Elements) . The number of the CCE in the "PDCCH candidates" is referred to as the aggregation level.

Or, the decoding unit 12 may be configured to attempt decoding the PDSCH designated by the DCI received through the PDCCH in priority to the PDSCH designated by the DCI received through the E-PDCCH (Enhanced-PDCCH), in compliance with the above-mentioned predetermined priority policy.

Or, the decoding unit 12 may be configured to attempt decoding the PDSCH designated by the DCI received through the PDCCH/E-PDCCH having a larger amount of MAC-SDU/RLC-SDU data received already preferentially.

Namely, the decoding unit 12 may be configured to attempt decoding preferentially part of the PDSCH among the PDSCH designated by the received DCI, by using the above-mentioned data amount. Here, conceivable example include an attempt of decoding preferentially the PDSCH designated by the DCI received through a predetermined number of the PDCCH/E-PDCCH in which the above-mentioned data amount is higher, an attempt of decoding preferentially the PDSCH designated by the DCI received through the PDCCH/E-PDCCH in which the above-mentioned data amount is in excess of a predetermined threshold, and the like.

Note that the "MAC-SDU/RLC-SDU" means MAC-SDU or RLC-SDU.

An operation of the mobile communication system of this first modified example will be described below with reference to Fig. 4. Specifically, an operation of the mobile station UE at the time of the handover from the cell #1 to the cell #10 in the mobile communication system of this first modified example will be described.

As shown in Fig. 4, in step S201, the mobile station UE acquires the DCI from the radio base station eNB #1 and the radio base station eNB #10 through the PDCCH/E-PDCCH.

In step S202, the mobile station UE attempts decoding only part of the PDSCH selected in compliance with the predetermined priority policy among the PDSCH designated by the acquired DCI.

The features of the present embodiment may also be expressed as follows.

A first feature of the present embodiment is summarized as a mobile station UE including: a reception unit 11 configured to receive DCI (scheduling information) from a radio base station eNB#1 (first radio base station) and a radio base station eNB#10 (second radio base station) through PDCCH/E-PDCCH (physical downlink control channel) when a handover from a cell #1 (first cell) under the radio base station eNB#1 to a cell #10 (second cell) under the radio base station eNB#10 is performed; and a decoding unit 12 configured to attempt decoding every PDSCH (physical downlink shared channel) designated by the DCI received by the reception unit 11.

According to the above-described aspect, the decoding unit 12 is configured to attempt decoding every PDSCH designated by the DCI received by the reception unit 11. Thus, the mobile station UE can surely acquire the same "HO command" transmitted separately from the radio base station eNB #1 and the radio base station eNB #10 in the handover procedure from the cell #1 to the cell #10.

A second feature of the present embodiment is summarized as a mobile station UE including: a reception unit 11 configured to receive DCI from a radio base station eNB#1 and a radio base station eNB#10 through PDCCH/E-PDCCH when a handover from a cell #1 under the radio base station eNB#1 to a cell #10 under the radio base station eNB#10 is performed; and a decoding unit 12 configured to attempt decoding part of PDSCHs selected in compliance with a predetermined priority policy among PDSCHs designated by the DCI received by the reception unit 11.

According to the above-described aspect, the number of PDSCH to be decoded at one time is restricted. Thus, it is possible to avoid complication of the devices and circuitry configuration of the mobile station UE while reducing battery consumption by the mobile station UE.

In the second feature of the present embodiment, the reception unit 11 may be configured to acquire the predetermined priority policy from a network.

According to the above-described feature, the mobile station UE can restrict the number of the PDSCH to be decoded at one time in compliance with a network policy.

In the second feature of the present embodiment, the reception unit 11 may be configured to acquire the predetermined priority policy in processing to establish an RRC connection.

According to the above-described feature, the mobile station UE can acquire the above-mentioned predetermined priority policy by utilizing the existing processing for establishing the RRC connection.

In the second feature of the present embodiment, the decoding unit 12 may be configured to attempt decoding the PDSCH designated by the DCI from the radio base station eNB#1 in priority to the PDSCH designated by the DCI from the radio base station eNB#10, in compliance with the predetermined priority policy.

In general, parameters are set in a handover source radio base station eNB in such a way that the "HO command" reaches the mobile station UE. For this reason, the mobile station UE is more likely to receive the "HO command" from the handover source radio base station eNB than from a handover destination radio base station eNB. Therefore, according to the above-mentioned feature, it is possible to improve a probability of reception of the "HO command" by the mobile station UE while restricting the number of the PDSCH to be decoded at one time.

In the second feature of the present embodiment, the decoding unit 12 may be configured to attempt decoding the PDSCH designated by the DCI located in Common-SS (common search space) of the PDCCH in priority to the PDSCH designated by the DCI located in UE-Specific-SS (specific search space) of the PDCCH, in compliance with the predetermined priority policy.

In general, the Common-SS tends to have a lower erroneous detection probability than that of the UE-Specific-SS. Therefore, according to the above-described feature, it is possible to improve the probability of reception of the "HO command" by the mobile station UE while restricting the number of the PDSCH to be decoded at one time.

In the second feature of the present embodiment, the decoding unit 12 may be configured to attempt decoding the PDSCH designated by the DCI received through the PDCCH having a higher aggregation level preferentially, in compliance with the predetermined priority policy.

In general, the higher aggregation level brings about better radio quality. Hence, the mobile station UE is more likely to be able to receive the "HO command." Therefore, according to the above-described feature, it is possible to improve the probability of reception of the "HO command" by the mobile station UE while restricting the number of the PDSCH to be decoded at one time.

In the second feature of the present embodiment, the decoding unit 12 may be configured to attempt decoding the PDSCH designated by the DCI received through PDCCH (ordinary physical downlink control channel) in priority to the PDSCH designated by the DCI received through E-PDCCH (enhanced physical downlink control channel), in compliance with the predetermined priority policy.

In general, the PDCCH has higher reception quality than that of the E-PDCCH. Hence, the mobile station UE is more likely to be able to receive the "HO command." Therefore, according to the above-described feature, it is possible to improve the probability of reception of the "HO command" by the mobile station UE while restricting the number of the PDSCH to be decoded at one time.

In the second feature of the present embodiment, the decoding unit 12 may be configured to attempt decoding the PDSCH designated by the DCI received through the PDCCH/E-PDCCH having a larger amount of MAC-SDU/RLC-SDU data received already preferentially, in compliance with the predetermined priority policy.

In general, a probability of being able to reconstruct the original "HO command" is thought to be higher as the data amount (RLC-SDU/MAC-SDU) received already through a layer 2 (RLC layer/MAC layer) is larger. Therefore, according to the above-described feature, it is possible to improve the probability of reception of the "HO command" by the mobile station UE while restricting the number of the PDSCH to be decoded at one time.

In the first or second feature of the present embodiment, the mobile station UE further may include: a transmission unit configured to notify a network of capability information indicating the number of pieces of simultaneously processable DCI.

According to the above-described feature, the network can determine the above-mentioned predetermined priority policy and a method of transmitting the DCI in consideration of a decoding processing capability of the mobile station UE.

It should be noted that the foregoing operations of the mobile station UE and radio base stations eNB#1/eNB#10 may be implemented by hardware, may be implemented by a software module executed by a processor, or may be implemented in combination of the two.

The software module may be provided in a storage medium in any format, such as a RAM (Random Access Memory), a flash memory, a ROM (Read Only Memory), an EPROM (Erasable Programmable ROM), an EEPROM (Electronically Erasable and Programmable ROM), a register, a hard disk, a removable disk, or a CD-ROM.

The storage medium is connected to a processor so that the processor can read and write information from and to the storage medium. Instead, the storage medium may be integrated in a processor. The storage medium and the processor may be provided inside an ASIC. Such an ASIC may be provided in the mobile station UE and radio base stations eNB#1/eNB#10. Otherwise, the storage medium and the processor may be provided as discrete components inside the mobile station UE and radio base stations eNB#1/eNB#10.

Hereinabove, the present invention has been described in detail by use of the foregoing embodiments. However, it is apparent to those skilled in the art that the present invention should not be limited to the embodiments described in the specification. The present invention can be implemented as an altered or modified embodiment without departing from the scope of the present invention, which are determined by the description of the scope of claims. Therefore, the description of the specification is intended for illustrative explanation only and does not impose any limited interpretation on the present invention.

### INDUSTRIAL APPLICABILITY

As described above, according to the present invention, it is possible to provide a mobile station, which is capable of performing appropriate decoding processing and thereby acquiring "HO command" in implementation of "RRC diversity" in a handover procedure between cells under different radio base stations eNB.

### EXPLANATION OF THE REFERENCE NUMERALS

- eNB: #1/eNB #10 radio base station
- UE: mobile station
- 11: reception unit
- 12: decoding unit
- 13: transmission unit

## Claims

1. A mobile station comprising:
a reception unit (11) configured to receive scheduling information from a first radio base station and a second radio base station through a physical downlink control channel when a handover from a first cell under the first radio base station to a second cell under the second radio base station is performed; and
a decoding unit (12) configured to attempt decoding, in the handover, part of physical downlink shared channels selected in compliance with a predetermined priority policy among physical downlink shared channels designated by the scheduling information received by the reception unit,
wherein the decoding unit (12) is configured to attempt decoding the physical downlink shared channel designated by the scheduling information from the first radio base station in priority to the physical downlink shared channel designated by the scheduling information from the second radio base station, in compliance with the predetermined priority policy.

2. The mobile station according to claim 1, wherein the reception unit (11) is configured to acquire the predetermined priority policy from a network.

3. The mobile station according to claim 1, wherein the reception unit (11) is configured to acquire the predetermined priority policy in processing to establish an RRC connection.

4. The mobile station according to any one of claims 1 to 3, wherein the decoding unit (12) is configured to attempt decoding the physical downlink shared channel designated by the scheduling information located in a common search space of the physical downlink control channel in priority to the physical downlink shared channel designated by the scheduling information located in a specific search space of the physical downlink control channel, in compliance with the predetermined priority policy.

5. The mobile station according to any one of claims 1 to 3, wherein the decoding unit (12) is configured to attempt decoding the physical downlink shared channel designated by the scheduling information received through the physical downlink control channel having a higher aggregation level preferentially, in compliance with the predetermined priority policy.

6. The mobile station according to any one of claims 1 to 3, wherein the decoding unit (12) is configured to attempt decoding the physical downlink shared channel designated by the scheduling information received through an ordinary physical downlink control channel in priority to the physical downlink shared channel designated by the scheduling information received through an enhanced physical downlink control channel, in compliance with the predetermined priority policy.

7. The mobile station according to any one of claims 1 to 3, wherein the decoding unit (12) is configured to attempt decoding the physical downlink shared channel designated by the scheduling information received through the physical downlink control channel having a larger amount of MAC-SDU or RLC-SDU data received already preferentially, in compliance with the predetermined priority policy.

8. The mobile station according to any one of claims 1 to 7, further comprising:
a transmission unit (13) configured to notify a network of capability information indicating the number of pieces of simultaneously processable scheduling information.

## Patentansprüche

1. Mobilstation, umfassend:
eine Empfangseinheit (11), die zum Empfangen von Planungsinformation von einer ersten Funkbasisstation und einer zweiten Funkbasisstation über einen physikalischen Downlink-Steuerkanal konfiguriert ist, wenn eine Übergabe von einer ersten Zelle unter der ersten Funkbasisstation zu einer zweiten Zelle unter der zweiten Funkbasisstation durchgeführt wird; und
eine Decodiereinheit (12), die konfiguriert ist, um zu versuchen, bei der Übergabe einen Teil physikalischer gemeinsam genutzter Downlink-Kanäle zu decodieren, die in Übereinstimmung mit einer vorgegebenen Prioritätsrichtlinie unter physikalischen gemeinsam genutzten Downlink-Kanälen ausgewählt sind, die durch die von der Empfangseinheit empfangene Planungsinformation bestimmt werden,
wobei die Decodiereinheit (12) konfiguriert ist zu versuchen, den durch die Planungsinformation von der ersten Funkbasisstation bestimmten physikalischen gemeinsam genutzten Downlink-Kanal in Übereinstimmung mit der vorgegebenen Prioritätsrichtlinie zu dekodieren,in Priorität zu dem physikalischen gemeinsam genutzten Downlink-Kanal, der durch die Planungsinformation von der zweiten Funkbasisstation bestimmt ist.

2. Mobilstation nach Anspruch 1, wobei die Empfangseinheit (11) zum Erlangen der vorgegebenen Prioritätsrichtlinie von einem Netzwerk konfiguriert ist.

3. Mobilstation nach Anspruch 1, wobei die Empfangseinheit (11) zum Erlangen der vorgegebenen Prioritätsrichtlinie bei der Verarbeitung konfiguriert ist, um eine RRC-Verbindung herzustellen.

4. Mobilstation nach einem der Ansprüche 1 bis 3, wobei die Decodiereinheit (12) konfiguriert ist, um zu versuchen, den physikalischen gemeinsam genutzten Downlink-Kanal in Übereinstimmung mit der vorgegeben Prioritätsrichtlinie zu decodieren, der durch die Planungsinformation bestimmt ist, die sich in einem gemeinsam genutzten Suchraum des physikalischen Downlink-Steuerkanals befindet, in Priorität zu dem physikalischen gemeinsam genutzten Downlink-Kanal, der durch die Planungsinformation bestimmt ist, die sich in einem spezifischen Suchraum des physikalischen Downlink-Steuerkanals befindet.

5. Mobilstation nach einem der Ansprüche 1 bis 3, wobei die Decodiereinheit (12) konfiguriert ist, um zu versuchen, den physikalischen gemeinsam genutzten Downlink-Kanal in Übereinstimmung mit der vorgegebenen Prioritätsrichtlinie zu dekodieren, der durch die über den physikalischen Downlink-Steuerkanal empfangene Planungsinformation bestimmt ist, die vorzugsweise eine höhere Aggregationsstufe aufweist.

6. Mobilstation nach einem der Ansprüche 1 bis 3, wobei die Decodiereinheit (12) konfiguriert ist, um zu versuchen, den physikalischen gemeinsam genutzten Downlink-Kanal in Übereinstimmung mit der vorgegebenen Prioritätsrichtlinie zu dekodieren, der durch die über einen normalen physikalischen Downlink-Steuerkanal empfangene Planungsinformation bestimmt ist, vor dem physikalischen gemeinsam genutzten Downlink-Kanal, der durch die über einen erweiterten physikalischen Downlink-Steuerkanal empfangene Planungsinformation bestimmt ist.

7. Mobilstation nach einem der Ansprüche 1 bis 3, wobei die Decodiereinheit (12) konfiguriert ist, um zu versuchen, den physikalischen gemeinsam genutzten Downlink-Kanal in Übereinstimmung mit der vorgegebenen Prioritätsrichtlinie zu dekodieren, der durch die durch den physikalischen Downlink-Steuerkanal empfangene Planungsinformation, die eine größere Menge bereits bevorzugter empfangener MAC-SDU- oder RLC-SDU-Daten aufweist, bestimmt ist.

8. Mobilstation nach einem der Ansprüche 1 bis 7, weiterhin umfassend:
eine Übertragungseinheit (13), die konfiguriert ist, um ein Netzwerk von Fähigkeitsinformationen zu benachrichtigen, die die Anzahl von Teilen von gleichzeitig verarbeitbarer Planungsinformation anzeigen.

## Revendications

1. Station mobile comprenant :
une unité de réception (11) configurée pour recevoir des informations de planification en provenance d'une première station de base radio et d'une seconde station de base radio par le biais d'un canal physique de commande de liaison descendante lorsqu'un transfert intercellulaire d'une première cellule desservie par la première station de base radio à une seconde cellule desservie par la seconde station de base radio est réalisé ; et
une unité de décodage (12) configurée pour tenter de décoder, dans le transfert intercellulaire, une partie de canaux physiques partagés de liaison descendante sélectionnés en conformité avec une politique de priorité prédéterminée parmi des canaux physiques partagés de liaison descendante désignés par les informations de planification reçues par l'unité de réception,
dans laquelle l'unité de décodage (12) est configurée pour tenter de décoder le canal physique partagé de liaison descendante désigné par les informations de planification en provenance de la première station de base radio en priorité par rapport au canal physique partagé de liaison descendante désigné par les informations de planification en provenance de la seconde station de base radio, en conformité avec la politique de priorité prédéterminée.

2. Station mobile selon la revendication 1, dans laquelle l'unité de réception (11) est configurée pour acquérir la politique de priorité prédéterminée auprès d'un réseau.

3. Station mobile selon la revendication 1, dans laquelle l'unité de réception (11) est configurée pour acquérir la politique de priorité prédéterminée dans un traitement pour établir une connexion RRC.

4. Station mobile selon l'une quelconque des revendications 1 à 3, dans laquelle l'unité de décodage (12) est configurée pour tenter de décoder le canal physique partagé de liaison descendante désigné par les informations de planification situées dans un espace de recherche commun du canal physique de commande de liaison descendante en priorité par rapport au canal physique partagé de liaison descendante désigné par les informations de planification situées dans un espace de recherche spécifique du canal physique de commande de liaison descendante, en conformité avec la politique de priorité prédéterminée.

5. Station mobile selon l'une quelconque des revendications 1 à 3, dans laquelle l'unité de décodage (12) est configurée pour tenter de décoder le canal physique partagé de liaison descendante désigné par les informations de planification reçues par le biais du canal physique de commande de liaison descendante ayant de préférence un niveau d'agrégation plus élevé, en conformité avec la politique de priorité prédéterminée.

6. Station mobile selon l'une quelconque des revendications 1 à 3, dans laquelle l'unité de décodage (12) est configurée pour tenter de décoder le canal physique partagé de liaison descendante désigné par les informations de planification reçues par le biais d'un canal physique de commande de liaison descendante ordinaire en priorité par rapport au canal physique partagé de liaison descendante désigné par les informations de planification reçues par le biais d'un canal physique de commande de liaison descendante amélioré, en conformité avec la politique de priorité prédéterminée.

7. Station mobile selon l'une quelconque des revendications 1 à 3, dans laquelle l'unité de décodage (12) est configurée pour tenter de décoder le canal physique partagé de liaison descendante désigné par les informations de planification reçues par le biais du canal physique de commande de liaison descendante ayant de préférence une quantité plus grande de données MAC-SDU ou RLC-SDU déjà reçues, en conformité avec la politique de priorité prédéterminée.

8. Station mobile selon l'une quelconque des revendications 1 à 7, comprenant en outre :
une unité d'émission (13) configurée pour notifier à un réseau des informations de capacité indiquant le nombre d'éléments d'informations de planification pouvant être traités simultanément.
